# EUROPEAN PATENT APPLICATION

(11) **EP 4 586 546 A1**
(43) Date of publication of application: **16.07.2025**
(21) Application number: 24794328.5
(22) Date of filing: 03.06.2024
(51) Int. Cl.: H04L 9/08

(54) **CRYPTOGRAPHIC CONFIGURATION METHOD, CRYPTOGRAPHIC SERVICE METHOD, CRYPTOGRAPHIC MANAGEMENT DEVICE, SERVER, CRYPTOGRAPHIC SERVICE SYSTEM AND STORAGE MEDIUM**

(30) Priority: 29.11.2023 CN 202311615980
(71) Applicant: Hygon Information Technology Co., Ltd., Tianjin 300392 (CN)
(72) Inventor: YING, Zhiwei, Tianjin 300392 (CN); CHEN, Shan, Tianjin 300392 (CN)
(74) Representative: Regimbeau
(86) International application number: PCT/CN2024/097074
(87) International publication number: WO 2025/112407

(57) **Abstract**

Embodiments of the present disclosure provide a crypto configuration method, a crypto service method, a crypto management device, a server, a crypto service system, and a storage medium, and the crypto configuration method is applied to a crypto management device that manages crypto modules of a plurality of servers and includes: sending key configuration information including at least a key for the first crypto module to perform a crypto service to a first crypto module, in which the first crypto module is any crypto module of any server; acquiring a first key mirror of the first crypto module that includes the key; and forwarding the first key mirror to a second crypto module such that the second crypto module acquires the key to perform a crypto operation with the key when the second crypto module is invoked by a corresponding server, in which the second crypto module is another crypto module configured on a different server.

## Description

The present application claims the priority to Chinese Patent Application No. 202311615980.1, filed on November 29, 2023, the entire disclosure of which is incorporated herein by reference as portion of the present application.

### TECHNICAL FIELD

Embodiments of the present disclosure relate to a crypto configuration method, a crypto service method, a crypto management device, a server, a crypto service system, and a storage medium.

### BACKGROUND

Crypto is the cornerstone of data security. By using crypto application modes to perform crypto operations on data, the confidentiality and security of data transmission can be effectively ensured. In addition to crypto operations on specific physical devices such as crypto machines, the crypto application modes may also be applied to a parallel cluster system composed of a large number of devices, e.g., cloud computing. In this context, a cluster composed of numerous servers and virtual machines running on the servers forms a large computing resource, where each server runs the same or similar services and performs the same or similar crypto operations.

In this context, what technical solution is provided to meet the crypto operation requirements of the devices in the parallel cluster system composed of a large number of devices and to improve the crypto service performance appears to be particularly important.

### SUMMARY

In view of the above, embodiments of the present disclosure provide a crypto configuration method, a crypto service method, a crypto management device, a server, a crypto service system, and a storage medium, to improve the crypto service performance.

In a first aspect, the embodiments of the present disclosure provide a crypto configuration method applied to a crypto management device, the crypto management device is configured to manage crypto modules of a plurality of servers, and the crypto configuration method includes:
sending key configuration information to a first crypto module, in which the key configuration information includes at least a key for the first crypto module to perform a crypto service, and the first crypto module is any crypto module of any server;
acquiring a first key mirror of the first crypto module, in which the first key mirror includes the key; and
forwarding the first key mirror to a second crypto module such that the second crypto module acquires the key to perform a crypto operation with the key when the second crypto module is invoked by a corresponding server, in which the second crypto module is another crypto module configured on a different server.

Optionally, the crypto modules of the plurality of servers managed by the crypto management device include a shared key;
the acquiring the first key mirror of the first crypto module includes encrypting, by the first crypto module, a corresponding key mirror with the shared key; and
the forwarding the first key mirror to the second crypto module such that the second crypto module acquires the key includes: forwarding the first key mirror to the second crypto module such that the second crypto module decrypts the first key mirror with the shared key to acquire a key mirror corresponding to the first crypto module, and acquiring the key according to the key mirror corresponding to the first crypto module.

Optionally, the crypto modules of the plurality of servers managed by the crypto management device include an asymmetric encryption key pair and a signed public key obtained from an external certificate authority, and a first asymmetric encryption key pair of the first crypto module is different from a second asymmetric encryption key pair of the second crypto module; and
before the acquiring the first key mirror of the first crypto module, the crypto configuration method further includes:
acquiring a public key certificate of the second crypto module signed by the external certificate authority, in which the public key certificate of the second crypto module includes a second public key in the second asymmetric encryption key pair; and
forwarding the public key certificate of the second crypto module signed by the external certificate authority to the first crypto module such that the first crypto module verifies the validity of the public key certificate of the second crypto module with the signed public key obtained from the external certificate authority.

**In** a second aspect, the embodiments of the present disclosure provide a crypto configuration method applied to crypto modules of servers, the crypto modules include a first crypto module and a second crypto module, the first crypto module is any crypto module of any server, the second crypto module is another crypto module configured on a different server, and the crypto configuration method includes:
acquiring, by the first crypto module, key configuration information sent by a crypto management device, in which the key configuration information includes at least a key for performing a crypto service;
sending, by the first crypto module, a first key mirror to the crypto management device such that the crypto management device forwards the first key mirror to the second crypto module, in which the first key mirror includes the key; and
acquiring, by the second crypto module, the first key mirror, and acquiring the key according to the first key mirror to perform a crypto operation with the key when the second crypto module is invoked by a corresponding server.

Optionally, the crypto modules include a shared key;
the sending, by the first crypto module, the first key mirror to the crypto management device includes encrypting, by the first crypto module, a corresponding key mirror with the shared key; and
the acquiring, by the second crypto module, the key according to the first key mirror includes:
decrypting, by the second crypto module, the first key mirror with the shared key to acquire a key mirror corresponding to the first crypto module; and
acquiring, by the second crypto module, the key according to the key mirror corresponding to the first crypto module.

Optionally, the crypto modules include an asymmetric encryption key pair and a signed public key obtained from an external certificate authority, and a first asymmetric encryption key pair of the first crypto module is different from a second asymmetric encryption key pair of the second crypto module; and
before the sending, by the first crypto module, the first key mirror to the crypto management device, the crypto configuration method further includes:
acquiring, by the first crypto module, a public key certificate of the second crypto module signed by the external certificate authority that is sent by the crypto management device, in which the public key certificate of the second crypto module includes a second public key in the second asymmetric encryption key pair;
verifying, by the first crypto module, the validity of the public key certificate of the second crypto module with the signed public key obtained from the external certificate authority; and
in response to the public key certificate being valid, acquiring, by the first crypto module, the second public key in the second asymmetric encryption key pair, and encrypting a corresponding key mirror with the second public key to obtain the first key mirror.

Optionally, the acquiring, by the second crypto module, the first key mirror, and acquiring the key according to the first key mirror includes:
acquiring, by the second crypto module, the first key mirror;
decrypting, by the second crypto module, the first key mirror with a second private key in the second asymmetric encryption key pair to acquire a key mirror corresponding to the first crypto module; and
acquiring, by the second crypto module, the key according to the key mirror corresponding to the first crypto module.

**In** a third aspect, the embodiments of the present disclosure provide a crypto service method applied to a crypto module of a server, and the method includes:
acquiring a crypto service request from a crypto application, in which the crypto application and the crypto module are on a same server; and
invoking a key to perform a crypto operation according to the crypto service request to provide a crypto service for the crypto application, in which the key is configured using the crypto configuration method according to the first aspect and/or the second aspect mentioned above.

**In** a fourth aspect, the embodiments of the present disclosure provide a crypto management device including at least one memory and at least one processor, the memory is configured to store one or more computer-executable instructions, and the processor is configured to invoke the one or more computer-executable instructions to perform the crypto configuration method according to the first aspect mentioned above.

**In** a fifth aspect, the embodiments of the present disclosure provide a server including at least one memory and at least one processor, the memory is configured to store one or more computer-executable instructions, and the processor is configured to invoke the one or more computer-executable instructions to perform the crypto configuration method according to the second aspect or the crypto service method according to the third aspect mentioned above.

In a sixth aspect, the embodiments of the present disclosure provide a crypto service system including at least a crypto management device and a plurality of servers, each of the plurality of servers includes at least a crypto module and a crypto application, and the crypto management device is configured to manage crypto modules of the plurality of servers; and
the crypto module includes:
a request acquisition unit, which is configured to acquire a crypto service request from the crypto application; and
a crypto operation unit, which is configured to invoke a key to perform a crypto operation according to the crypto service request to provide a crypto service for the crypto application, in which the key is configured by the crypto management device.

Optionally, the crypto management device includes:
a configuration information sending unit, which is configured to send key configuration information to a first crypto module, in which the key configuration information includes at least a key for the first crypto module to perform a crypto service, and the first crypto module is any crypto module of any server;
a mirror acquisition unit, which is configured to acquire a first key mirror of the first crypto module, in which the first key mirror includes the key; and
a mirror forwarding unit, which is configured to forward the first key mirror to a second crypto module such that the second crypto module acquires the key to perform a crypto operation with the key when the second crypto module is invoked by a corresponding server, in which the second crypto module is another crypto module configured on a different server.

Optionally, the crypto modules include the first crypto module and the second crypto module;
the first crypto module is configured to: acquire the key configuration information sent by the crypto management device, in which the key configuration information includes at least the key for performing the crypto service; and send the first key mirror to the crypto management device such that the crypto management device forwards the first key mirror to the second crypto module, in which the first key mirror includes the key; and
the second crypto module is configured to acquire the first key mirror, and acquire the key according to the first key mirror to perform the crypto operation with the key when the second crypto module is invoked by a corresponding server.

Optionally, the crypto module is configured with a signed public key, and the signed public key is configured based on a key file of an external certificate authority.

In a seventh aspect, the embodiments of the present disclosure provide a storage medium storing one or more computer-executable instructions, and the one or more computer-executable instructions, when executed, implement the crypto configuration method according to the first aspect mentioned above, or the crypto configuration method according to the scond aspect mentioned above, or the crypto service method according to the third aspect mentioned above.

The crypto configuration method provided by the embodiments of the present disclosure is applied to a crypto management device that is configured to manage crypto modules of a plurality of servers, and includes: sending, by the crypto management device, key configuration information to a first crypto module, in which the key configuration information includes at least a key for the first crypto module to perform a crypto service, and the first crypto module is any crypto module of any server; then acquiring a first key mirror of the first crypto module, in which the first key mirror includes the key; and forwarding the first key mirror to a second crypto module such that the second crypto module acquires the key to perform a crypto service with the key when the second crypto module is invoked by a corresponding server, in which the second crypto module is another crypto module configured on a different server.

As can be seen, in the embodiments of the present disclosure, in the case where the crypto management device configures the key for performing the crypto operation for the crypto module of any server, the key mirror including the key is forwarded by the crypto management device to the crypto modules of different servers such that the keys are configured on the crypto modules of the plurality of servers to achieve key synchronization of the crypto modules on different servers. Then, the servers may perform crypto operations based on the crypto modules configured with the keys to acquire crypto services. Compared with the way of a plurality of servers accessing a crypto machine via a network to acquire crypto services, the plurality of servers in the embodiments of the present disclosure may not rely on the network when acquiring the crypto services, thereby effectively reducing the occupancy of network bandwidth resources while improving the crypto service performance.

### BRIEF DESCRIPTION OF DRAWINGS

In order to more clearly illustrate the technical solutions in the embodiments of the present disclosure, the drawings to be used in the description of the embodiments will be briefly described below. Obviously, the drawings in the following description are only some embodiments recorded in the present disclosure. For those ordinarily skilled in the art, other drawings may be obtained based on these drawings without inventive work.
Fig. 1 is an optional schematic diagram of a cluster system;
Fig. 2 is a schematic diagram of an architecture of a crypto service system provided by the embodiments of the present disclosure;
Fig. 3 is a flowchart of interaction of a crypto configuration method provided by the embodiments of the present disclosure;
Fig. 4 is an optional schematic flowchart of a crypto configuration method provided by the embodiments of the present disclosure;
Fig. 5 is another optional schematic flowchart of a crypto configuration method provided by the embodiments of the present disclosure;
Fig. 6 is another flowchart of interaction of a crypto configuration method provided by the embodiments of the present disclosure;
Fig. 7 is an optional schematic flowchart of a crypto service method provided by the embodiments of the present disclosure;
Fig. 8 is an optional block diagram of a crypto management device provided by the embodiments of the present disclosure;
Fig. 9 is an optional schematic structural diagram of a crypto module provided by the embodiments of the present disclosure; and
Fig. 10 is an optional schematic structural diagram of a crypto management device provided by the embodiments of the present disclosure.

### DETAILED DESCRIPTION

The technical solutions in the embodiments of the present disclosure will be described in a clearly and fully understandable way in conjunction with the drawings in the embodiments of the present disclosure. Apparently, the described embodiments are only a part but not all of the embodiments of the present disclosure. Based on the embodiments of the present disclosure, those ordinarily skilled in the art can acquire other embodiment(s), without any inventive work, which should be within the scope of the present disclosure.

As described in background, in addition to crypto operations on specific physical devices such as crypto machines, the crypto application modes may also be applied to a parallel cluster system composed of a large number of devices, e.g., cloud computing. In this context, a cluster composed of numerous servers and virtual machines running on the servers forms a large computing resource, where each server runs the same or similar services and performs the same or similar crypto operations.

The parallel cluster system composed of a large number of devices (hereinafter referred to as a cluster system) are typically connected by a high-speed communication network. Therefore, in order to meet the crypto operation requirements of the devices in the cluster system, in one example, a "centralized" crypto service may be adopted. For a certain type of crypto service requirement, a certain number of crypto machines are provided in the cluster system to centrally store and manage keys of all servers in the system. By allowing the crypto machines to access a cluster network, the servers in the cluster access services provided by the crypto machines via the network.

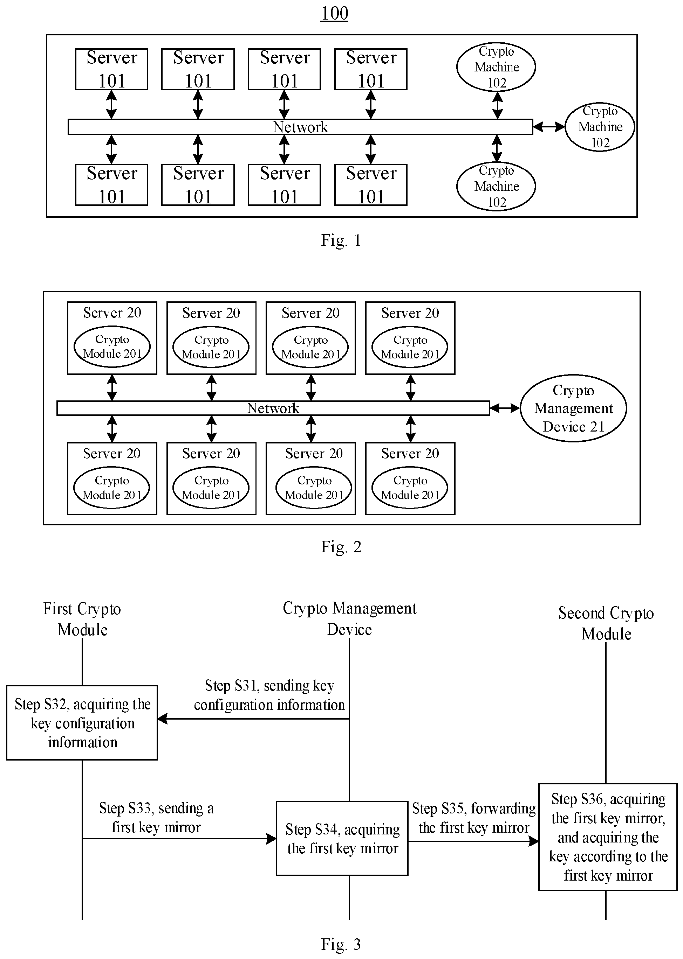

Fig. 1 illustrates an optional schematic diagram of a cluster system 100. The cluster system 100 includes a plurality of servers 101 and a plurality of crypto machines 102, and the plurality of servers 101 and the plurality of crypto machines 102 are communication with each other via a network. The plurality of servers 101 illustrated in Fig. 1 have crypto service requirements for a certain type. The plurality of crypto machines 102 have the same configuration for the crypto service types of the servers 101 and can provide crypto services of the same target type.

However, the inventors have discovered that the following issues may exist. A server sends data to be processed to a crypto machine, and the crypto machine performs a crypto operation on the data to be processed and then returns the data to the server via the network; accordingly, in the case where all the servers in the cluster system access crypto machines via the network to perform crypto operations, mass data needs to be moved such that substantial network bandwidth is occupied, which affects the normal business over the network. Moreover, in the case where a plurality of servers simultaneously use the network to execute tasks, the instability of network bandwidth may degrade the crypto service performance of the crypto machines. Moreover, the cost of crypto machines is relatively high, and the price of specialized crypto machines dedicated to a certain type of crypto service is even more expensive, significantly increasing the development cost of the cluster system.

Therefore, in the case where the parallel cluster system composed of a large number of devices has crypto operation requirements, it is particularly important to satisfy the crypto operation requirements of each device in the parallel cluster system and to improve the crypto operation performance of the system. On this basis, with the improved technical solutions in the embodiments of the present disclosure, the crypto management device configures the key for performing the crypto operation for the crypto module of any server, and then the key mirror including the key is forwarded to the crypto modules of different servers such that the keys are configured on crypto modules of a plurality of servers to achieve key synchronization of the crypto modules on different servers. Then, the servers may perform the crypto operations based on the crypto modules configured with the keys to acquire crypto services. Compared with the way of a plurality of servers accessing a crypto machine via a network to acquire crypto services, the plurality of servers in the embodiments of the present disclosure may not rely on the network when acquiring the crypto services, thereby effectively reducing the occupancy of network bandwidth resources while improving the crypto service performance.

Based on the above ideas, Fig. 2 exemplarily illustrates a schematic diagram of an architecture of a crypto service system provided by the embodiments of the present disclosure. As illustrated in Fig. 2, the crypto service system includes at least a plurality of servers 20 and a crypto management device (or referred to as crypto management terminal, CMT) 21.

The server 20 refers to a special-purpose computer for providing services for users in a network environment, and is installed with a network operating system and various kinds of application software, e.g., a crypto application. The server may run the relevant crypto application according to business requirements. The server 20 is correspondingly provided with a crypto module (CM) 201. The crypto module 201 is a module with crypto operation functionality, stores a corresponding key for the crypto application on the server to perform a crypto service, and performs a crypto operation using the stored key when the crypto application on the server invokes the crypto module based on a provided special interface. The plurality of servers 20 in Fig. 2 run in the same network environment, and the operation system may be referred to as a parallel cluster system.

The crypto management device 21 is configured to manage the crypto modules 201 of the plurality of servers 20, and may create or modify keys stored in the crypto modules 201 and enable key synchronization by forwarding a key mirror between different crypto modules 201.

It should be noted that the crypto module in the embodiments of the present disclosure may store all keys, and in order to guarantee that all crypto modules can provide the consistency crypto service, key information needs to be synchronized between different crypto modules. Therefore, the crypto modules of the plurality of servers are managed by the crypto management device so that key synchronization of different crypto modules may be achieved and the crypto service performance may be improved.

The crypto configuration solutions provided in the embodiments of the present disclosure are described in detail based on the architecture of the crypto service system described above.

Fig. 3 exemplarily illustrates a flowchart of interaction of a crypto configuration method provided by the embodiments of the present disclosure. The method may be implemented by the crypto modules of the servers and the crypto management device in the crypto service system illustrated in Fig. 2, and the crypto modules may include a first crypto module and a second crypto module; the first crypto module is any crypto module of any server, and the second crypto module is another crypto module configured on a different server. As illustrated in Fig. 3, the method may include the following steps.

Step S31, sending, by the crypto management device, key configuration information to the first crypto module.

In the case where the crypto management device manages the crypto modules of a plurality of servers, the crypto management device may send the key configuration information to the first crypto module, and the key configuration information may be information for configuring a key corresponding to the crypto module. Moreover, in the case where the crypto management device has an authority to create or modify keys stored in the crypto modules, the key configuration information may include at least a key for the first crypto module to perform a crypto service, which may be a new created key or may be a key after modifying a certain key.

It should be noted that step S31 in the embodiments of the present disclosure may be implemented when there is an execution requirement on the crypto module, for example, when the system is powered on and started, or when the crypto module of the corresponding server in the system is started.

Step S32, acquiring, by the first crypto module, the key configuration information sent by the crypto management device.

Step S33, sending, by the first crypto module, a first key mirror to the crypto management device.

It may be understood that the crypto module typically stores a crypto algorithm and a key in a mirror file within the module, and when the crypto module is started, the crypto module loads the mirror file and performs the corresponding crypto algorithm and key operation. Therefore, after acquiring the key configuration information sent by the crypto management device, the first crypto module can update the corresponding key mirror based on the key configuration information. The key mirror of the crypto module is a copy of the key required by the crypto module to perform the crypto operation, including mirror forms of all keys stored in the crypto module. The key mirror may be a binary code file or data file. By using the key mirror, the security and confidentiality of the key information may be protected, and unauthorized access and attacks may be prevented.

Thus, in order to synchronize the key to different crypto modules, after the first crypto module acquires the key configuration information sent by the crypto management device, the first crypto module may send the first key mirror to the crypto management device. The first key mirror may include the key for the first crypto module to perform a crypto service. Moreover, in order to ensure the key security of the crypto module, as an optional implementation, the first key mirror may be a mirror file after a key mirror corresponding to the first crypto module is encrypted.

It should be noted that the first crypto module sends the first key mirror to the crypto management device, which may be performed when the crypto management device invokes an information export interface corresponding to the first crypto module.

Step S34, acquiring, by the crypto management device, the first key mirror of the first crypto module.

Step S35, forwarding, by the crypto management device, the first key mirror to the second crypto module.

It may be understood that in order to synchronize the key between different crypto modules, after acquiring the first key mirror of the first crypto module, the crypto management device may forward the first key mirror to the second crypto module such that the second crypto module acquires the key for the first crypto module to perform the crypto service to perform a crypto operation with the key when the second crypto module is invoked by a corresponding server.

It should be noted that the crypto management device forwards the first key mirror to the second crypto module, which may be implemented by invoking an information import interface of the second crypto module.

Step S36, acquiring, by the second crypto module, the first key mirror, and acquiring the key according to the first key mirror.

In the case where the first key mirror includes the key for the first crypto module to perform the crypto service, after acquiring the first key mirror forwarded by the crypto management device, the second crypto module can acquire the key according to the first key mirror. Thus, when invoked by the corresponding server, the second crypto module can perform the crypto operation with the key so that the server can acquire the crypto service.

As can be seen, in the embodiments of the present disclosure, in the case where the crypto management device configures the key for performing the crypto operation for the crypto module of any server, the key mirror including the key is forwarded by the crypto management device to the crypto modules of different servers such that the keys are configured on the crypto modules of the plurality of servers to achieve key synchronization of the crypto modules on different servers. Then, the servers may perform crypto operations based on the crypto modules configured with the keys to acquire crypto services. Compared with the way of a plurality of servers accessing a crypto machine via a network to acquire crypto services, the plurality of servers in the embodiments of the present disclosure may not rely on the network when acquiring the crypto services, thereby effectively reducing the occupancy of network bandwidth resources while improving the crypto service performance.

In some embodiments, in order to guarantee the security of the key mirror forwarded by the crypto management device, the first key mirror may be obtained after the first crypto module encrypts the key mirror thereof, i.e., the first key mirror is a ciphertext of the key mirror corresponding to the first crypto module.

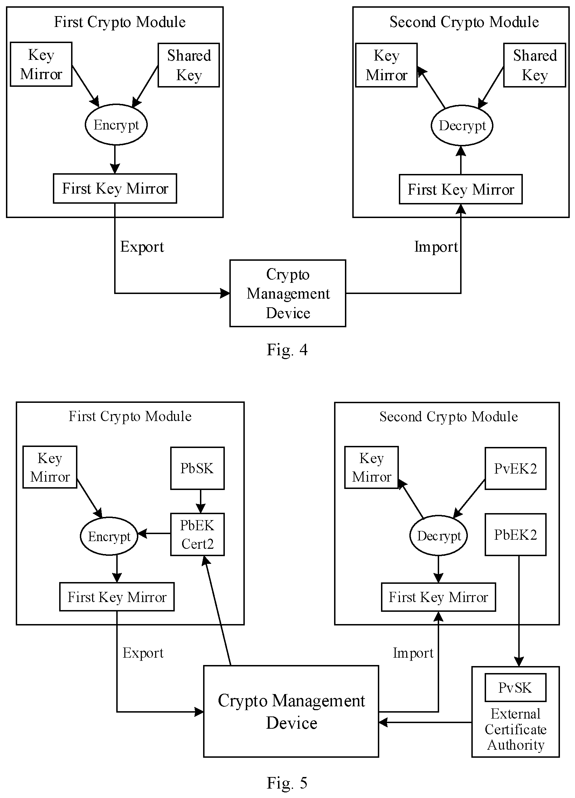

As an optional implementation, the key for the first crypto module to encrypt the key mirror may be a shared key (SK). Fig. 4 exemplarily illustrates an optional flowchart of a crypto configuration method in the embodiments of the present disclosure. As illustrated in Fig. 4, the first crypto module and the second crypto module each include a shared key. The first crypto module encrypts the corresponding key mirror thereof with the shared key to obtain the first key mirror. Thus, when the crypto management device invokes an export interface of the first crypto module, the first crypto module exports the first key mirror to the crypto management device. When the crypto management device invokes an import interface of the second crypto module, the crypto management device imports the first key mirror to the second crypto module. After the second crypto module acquires the first key mirror imported by the crypto management device, the second crypto module may decrypt the first key mirror with the shared key to acquire the key mirror corresponding to the first crypto module. Thus, the key may be obtained according to the key mirror corresponding to the first crypto module.

It should be noted that the shared key of the crypto modules may be set when the servers are manufactured by a manufacturer. Therefore, the shared key may be present on a plurality of crypto modules belonging to the same manufacturer.

As another optional implementation, the crypto module may include an asymmetric encryption key pair (a public key and a private key), and the asymmetric encryption key pairs of the crypto modules may be different. Therefore, the key for the first crypto module to encrypt the key mirror may be the public key in the asymmetric encryption key pair of the second crypto module. Fig. 5 exemplarily illustrates another optional flowchart of a crypto configuration method provided by the embodiments of the present disclosure. As illustrated in Fig. 5, the second crypto module includes an asymmetric encryption key pair (a public key illustrated as PbEK2 and a private key illustrated as PvEK2 in the figure). The first crypto module is configured with a signed public key (illustrated as PbSK). The signed public key may be configured based on a key file of an external certificate authority. Specifically, the external certificate authority (CA) has an asymmetric signature key pair (a public key illustrated as PbSK and a private key illustrated as PvSK in the figure). A public key certificate may be issued for the public key in the asymmetric encryption key pair of the verified crypto module based on the external certificate authority, and the public key certificate may be used by another crypto module to verify the validity of the crypto module to guarantee the transmission security of the key mirror.

It should be noted that any crypto module of any server in the embodiments of the present disclosure may include an asymmetric encryption key pair and a signed public key obtained from the external certificate authority. Fig. 5 merely illustrates the signed public key PbSK in the first crypto module and the asymmetric encryption key pair (public key PbEK2 and private key PvEK2) in the second crypto module. The private key PvEK in the asymmetric encryption key pair of the crypto module is always within the crypto module and cannot be read externally. The public key PbEK may be read externally, and the signed public key PbSK of the external certificate authority cannot be tampered.

In order to realize that the first crypto module verifies the validity of the second crypto module, the public key certificate PbEKCert (illustrated as PbEKCert2 in the figure) may be issued by the external certificate authority for the public key PbEK2 in the second asymmetric encryption key pair of the second crypto module, and the PbEKCert certificate may include the public key PbEK2 of the second crypto module. Moreover, the external certificate authority can sign the public key certificate of the second crypto module with a signed private key PvSK such that the first crypto module confirms the authenticity and integrity of the public key certificate of the second crypto module to verify the public key certificate as a valid public key certificate.

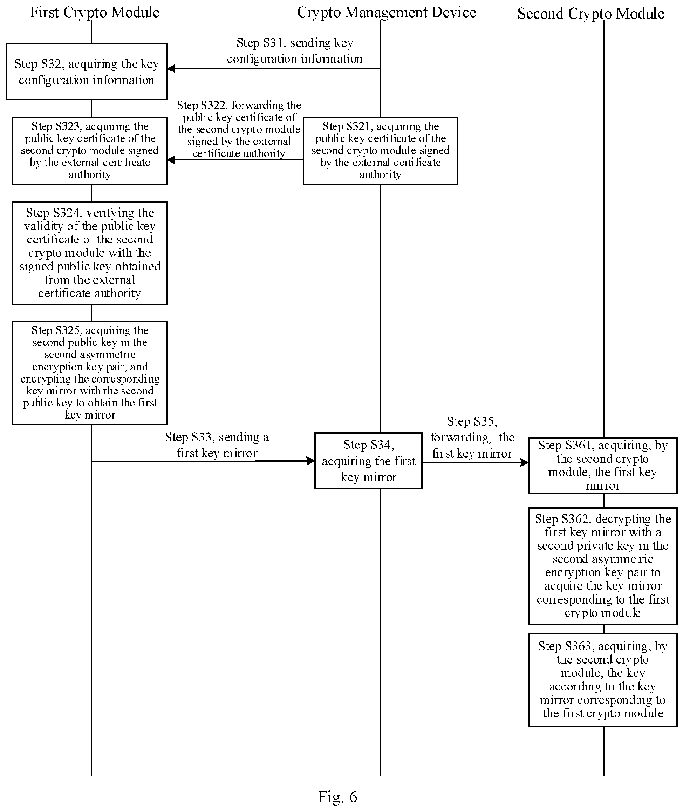

Corresponding to Fig. 5, Fig. 6 exemplarily illustrates another flowchart of interaction of a crypto configuration method in the embodiments of the present disclosure. As illustrated in Fig. 6, before step S33, the crypto configuration method further includes the following steps.

Step S321, acquiring, by the crypto management device, the public key certificate of the second crypto module signed by the external certificate authority.

The public key certificate of the second crypto module includes a second public key in the second asymmetric encryption key pair.

Step S322, forwarding, by the crypto management device, the public key certificate of the second crypto module signed by the external certificate authority to the first crypto module.

Thus, the first crypto module can verify the validity of the public key certificate of the second crypto module with the signed public key obtained from the external certificate authority.

Step S323, acquiring, by the first crypto module, the public key certificate of the second crypto module signed by the external certificate authority.

Step S324, verifying, by the first crypto module, the validity of the public key certificate of the second crypto module with the signed public key obtained from the external certificate authority.

In one specific example, the first crypto module may verify the signature of the public key certificate PbEKCert2 of the second crypto module with the signed public key PbSK obtained from the external certificate authority. If the verification is successful, it may be confirmed that the public key certificate of the second crypto module is authentic and integral, and the public key certificate of the second crypto module is valid, and then step S325 is performed.

Step S325, acquiring, by the first crypto module, the second public key in the second asymmetric encryption key pair, and encrypting the corresponding key mirror with the second public key to obtain the first key mirror.

Further, in some embodiments, based on that the first key mirror is obtained by the first crypto module encrypting the corresponding key mirror thereof with the second public key of the second crypto module, as illustrated in Fig. 6, the process that the second crypto module acquires the first key mirror and acquires the key according to the first key mirror may specifically include the following steps.

Step S361, acquiring, by the second crypto module, the first key mirror.

Step S362, decrypting, by the second crypto module, the first key mirror with a second private key in the second asymmetric encryption key pair to acquire the key mirror corresponding to the first crypto module.

Step S363, acquiring, by the second crypto module, the key according to the key mirror corresponding to the first crypto module.

As can be seen, in the embodiments of the present disclosure, in the case where the crypto management device configures the key for performing the crypto operation for the crypto module of any server, the key mirror including the key is forwarded by the crypto management device to the crypto modules of different servers such that the keys are configured on the crypto modules of the plurality of servers to achieve key synchronization of the crypto modules on different servers. Then, the servers may perform crypto operations based on the crypto modules configured with the keys to acquire crypto services. Compared with the way of a plurality of servers accessing a crypto machine via a network to acquire crypto services, the plurality of servers in the embodiments of the present disclosure may not rely on the network when acquiring the crypto services, thereby effectively reducing the occupancy of network bandwidth resources while improving the crypto service performance.

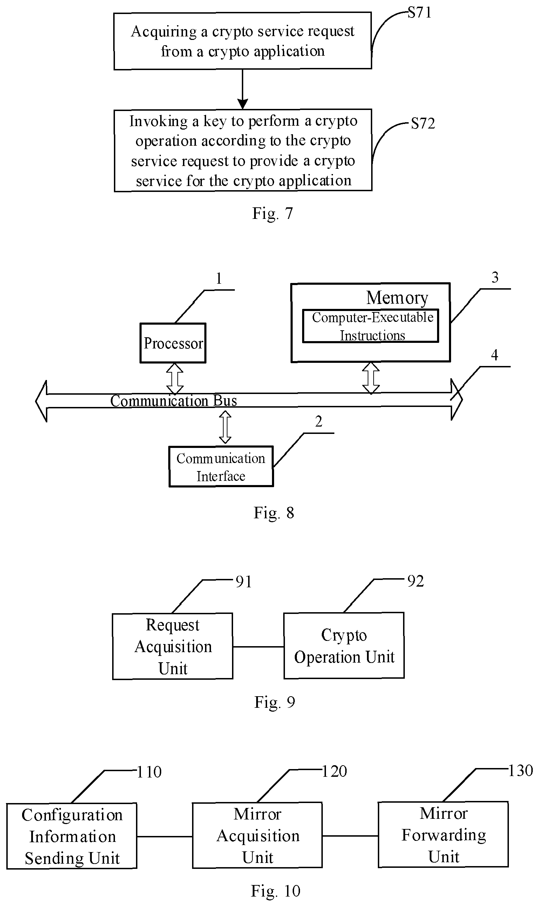

The embodiments of the present disclosure further provide a crypto service method. The crypto service method is based on the architecture of the crypto service system illustrated in Fig. 2 and applied to the crypto module 201 of the server 20. As an optional implementation, Fig. 7 exemplarily illustrates an optional flowchart of a crypto service method provided by the embodiments of the present disclosure. As illustrated in Fig. 7, the crypto service method includes the following steps.

Step S71, acquiring a crypto service request from a crypto application.

The crypto application and the crypto module are on the same server. Thus, within the server, the crypto application can directly send the crypto service request to the crypto module without transmission to the outside via the network, such that the crypto module acquires the crypto service request from the crypto application.

Step S72, invoking a key to perform a crypto operation according to the crypto service request to provide a crypto service for the crypto application.

The key invoked by the crypto module is configured by the crypto configuration method mentioned above.

As can be seen, in the crypto service method of the embodiments of the present disclosure, in the case where the crypto application of the server has the crypto service request, the crypto module may be accessed such that the crypto module performs the crypto operation with the configured key, thus achieving access to the crypto service. The crypto service request does not need to be transmitted to the outside via the network so that the crypto application can access the crypto service without relying on the network. The occupancy of network bandwidth resources is effectively reduced, and the crypto service performance is improved.

The embodiments of the present disclosure further provide a crypto management device. As an optional implementation, Fig. 8 is an optional block diagram of a crypto management device provided by the embodiments of the present disclosure. As illustrated in Fig. 8, the crypto management device may include at least one processor 1, at least one communication interface 2, at least one memory 3, and at least one communication bus 4.

In the embodiments of the present disclosure, the number of the processor 1, the communication interface 2, the memory 3, and the communication bus 4 are each at least one, and the processor 1, the communication interface 2, and the memory 3 are in communication with one another by means of the communication bus 4.

Optionally, the communication interface 2 may be an interface of a communication module for network communication.

Optionally, the processor 1 may be a central processing unit (CPU), a graphics processing unit (GPU), a neural processing unit (NPU), a field programmable gate array (FPGA), a tensor processing unit (TPU), an AI chip, or an application specific integrated circuit (ASIC), or is configured as one or more integrated circuits for implementing the embodiments of the present disclosure, etc.

The memory 3 may include a high-speed random access memory (RAM), or may further include a non-volatile memory, for example, at least one magnetic disk memory.

The memory 3 is configured to store one or more computer-executable instructions, and the processor 1 is configured to invoke the one or more computer-executable instructions to perform the crypto configuration method mentioned above.

The embodiments of the present disclosure further provide a server. The server may correspond to that illustrated in Fig. 8. The server may include at least one memory and at least one processor, the memory is configured to store one or more computer-executable instructions, and the processor is configured to invoke the one or more computer-executable instructions to perform the crypto configuration method mentioned above or the crypto service method mentioned above.

The embodiments of the present disclosure further provide a crypto service system. With reference to Fig. 2, the crypto service system may include at least a crypto management device and a plurality of servers. Each of the plurality of servers may include at least a crypto module and a crypto application (not illustrated), and the crypto management device may be configured to manage crypto modules of the plurality of servers.

Fig. 9 exemplarily illustrates an optional schematic structural diagram of a crypto module provided by the embodiments of the present disclosure. As illustrated in Fig. 9, the crypto module may include:
a request acquisition unit 91, which is configured to acquire a crypto service request from a crypto application; and
a crypto operation unit 92, which is configured to invoke a key to perform a crypto operation according to the crypto service request to provide a crypto service for the crypto application, in which the key is configured by the crypto management device.

In some embodiments, based on the characteristic of the crypto management device managing crypto modules of a plurality of servers, Fig. 10 exemplarily illustrates an optional schematic structural diagram of a crypto management device provided by the embodiments of the present disclosure. As illustrated in Fig. 10, the crypto management device may include:
a configuration information sending unit 110, which is configured to send key configuration information to a first crypto module, in which the key configuration information includes at least a key for the first crypto module to perform a crypto service, and the first crypto module is any crypto module of any server;
a mirror acquisition unit 120, which is configured to acquire a first key mirror of the first crypto module, in which the first key mirror includes the key; and
a mirror forwarding unit 130, which is configured to forward the first key mirror to a second crypto module such that the second crypto module acquires the key to perform a crypto operation with the key when the second crypto module is invoked by a corresponding server, in which the second crypto module is another crypto module configured on a different server.

Optionally, the crypto modules of the plurality of servers managed by the crypto management device may include a shared key.

The first key mirror of the first crypto module acquired by the mirror acquisition unit 120 may be obtained by encrypting, by the first crypto module, a corresponding key mirror with the shared key.

The process that the mirror forwarding unit 130 forwards the first key mirror to the second crypto module such that the second crypto module acquires the key may include: forwarding the first key mirror to the second crypto module such that the second crypto module decrypts the first key mirror with the shared key to acquire a key mirror corresponding to the first crypto module, and acquiring the key according to the key mirror corresponding to the first crypto module.

Optionally, the crypto modules of the plurality of servers managed by the crypto management device may include an asymmetric encryption key pair and a signed public key obtained from an external certificate authority, and a first asymmetric encryption key pair of the first crypto module is different from a second asymmetric encryption key pair of the second crypto module.

Before the mirror acquisition unit 120 acquires the first key mirror of the first crypto module, the following steps may further be included:
acquiring a public key certificate of the second crypto module signed by the external certificate authority, in which the public key certificate of the second crypto module includes a second public key in the second asymmetric encryption key pair; and
forwarding the public key certificate of the second crypto module signed by the external certificate authority to the first crypto module such that the first crypto module verifies the validity of the public key certificate of the second crypto module with the signed public key obtained from the external certificate authority.

In some embodiments, based on the characteristic of the crypto modules being managed by the crypto management device, the crypto modules of the embodiments of the present disclosure may include a first crypto module and a second crypto module. The first crypto module may be any crypto module of any server. The second crypto module is another crypto module different from the first crypto module and configured on a different server.

The first crypto module is configured to: acquire the key configuration information sent by the crypto management device, in which the key configuration information includes at least the key for performing the crypto service; and send the first key mirror to the crypto management device such that the crypto management device forwards the first key mirror to the second crypto module, in which the first key mirror includes the key.

The second crypto module is configured to acquire the first key mirror, and acquire the key according to the first key mirror to perform the crypto operation with the key when the second crypto module is invoked by the corresponding server.

Optionally, the crypto module may include a shared key.

The first key mirror sent by the first crypto module to the crypto management device may be obtained by encrypting, by the first crypto module, a corresponding key mirror with the shared key.

The acquiring, by the second crypto module, the key according to the first key mirror may include:
decrypting, by the second crypto module, the first key mirror with the shared key to acquire a key mirror corresponding to the first crypto module; and
acquiring, by the second crypto module, the key according to the key mirror corresponding to the first crypto module.

Optionally, the crypto module may include an asymmetric encryption key pair and a signed public key obtained from an external certificate authority, and a first asymmetric encryption key pair of the first crypto module is different from a second asymmetric encryption key pair of the second crypto module.

Before the first crypto module sends the first key mirror to the crypto management device, the following steps may be further included:
acquiring, by the first crypto module, a public key certificate of the second crypto module signed by the external certificate authority that is sent by the crypto management device, in which the public key certificate of the second crypto module includes a second public key in the second asymmetric encryption key pair;
verifying, by the first crypto module, the validity of the public key certificate of the second crypto module with the signed public key obtained from the external certificate authority; and
in response to the public key certificate being valid, acquiring, by the first crypto module, the second public key in the second asymmetric encryption key pair, and encrypting a corresponding key mirror with the second public key to obtain the first key mirror.

Optionally, the step of acquiring, by the second crypto module, the first key mirror, and acquiring the key according to the first key mirror may include:
acquiring, by the second crypto module, the first key mirror;
decrypting, by the second crypto module, the first key mirror with a second private key in the second asymmetric encryption key pair to acquire a key mirror corresponding to the first crypto module; and
acquiring, by the second crypto module, the key according to the key mirror corresponding to the first crypto module.

In some embodiments, the crypto module may be configured with a signed public key, and the signed public key is configured based on a key file of an external certificate authority.

The embodiments of the present disclosure further provide a storage medium, storing one or more computer-executable instructions which, when executed, implement the crypto configuration method performed by the crypto management device, or the crypto configuration method performed by the crypto module of the server, or the crypto service method performed by the crypto module of the server in the embodiments of the present disclosure.

A plurality of embodiment solutions provided by the embodiments of the present disclosure are described above. The optional ways described in the embodiment solutions may be combined with and cross-referenced to one another in a non-conflicting manner so that a plurality of possible embodiment solutions may be derived. These may all be considered as embodiment solutions disclosed by the embodiments of the present disclosure.

Although being disclosed as described above, the present disclosure is not limited thereto. Any person skilled in the art may make changes and modifications without departing from the spirit and scope of the present disclosure. Therefore, the protection scope of the present disclosure should be subject to the scope as defined by the claims.

## Claims

1. A crypto configuration method, applied to a crypto management device, wherein the crypto management device is configured to manage crypto modules of a plurality of servers, and the crypto configuration method comprises:
sending key configuration information to a first crypto module, wherein the key configuration information comprises at least a key for the first crypto module to perform a crypto service, and the first crypto module is any crypto module of any server;
acquiring a first key mirror of the first crypto module, wherein the first key mirror comprises the key; and
forwarding the first key mirror to a second crypto module such that the second crypto module acquires the key to perform a crypto operation with the key when the second crypto module is invoked by a corresponding server, wherein the second crypto module is another crypto module configured on a different server.

2. The crypto configuration method according to claim 1, wherein the crypto modules of the plurality of servers managed by the crypto management device comprise a shared key;
the acquiring the first key mirror of the first crypto module comprises encrypting, by the first crypto module, a corresponding key mirror with the shared key; and
the forwarding the first key mirror to the second crypto module such that the second crypto module acquires the key comprises: forwarding the first key mirror to the second crypto module such that the second crypto module decrypts the first key mirror with the shared key to acquire a key mirror corresponding to the first crypto module, and acquiring the key according to the key mirror corresponding to the first crypto module.

3. The crypto configuration method according to claim 1, wherein the crypto modules of the plurality of servers managed by the crypto management device comprise an asymmetric encryption key pair and a signed public key obtained from an external certificate authority, and a first asymmetric encryption key pair of the first crypto module is different from a second asymmetric encryption key pair of the second crypto module; and
before the acquiring the first key mirror of the first crypto module, the crypto configuration method further comprises:
acquiring a public key certificate of the second crypto module signed by the external certificate authority, wherein the public key certificate of the second crypto module comprises a second public key in the second asymmetric encryption key pair; and
forwarding the public key certificate of the second crypto module signed by the external certificate authority to the first crypto module such that the first crypto module verifies the validity of the public key certificate of the second crypto module with the signed public key obtained from the external certificate authority.

4. A crypto configuration method, applied to crypto modules of servers, wherein the crypto modules comprise a first crypto module and a second crypto module, the first crypto module is any crypto module of any server, the second crypto module is another crypto module configured on a different server, and the crypto configuration method comprises:
acquiring, by the first crypto module, key configuration information sent by a crypto management device, wherein the key configuration information comprises at least a key for performing a crypto service;
sending, by the first crypto module, a first key mirror to the crypto management device such that the crypto management device forwards the first key mirror to the second crypto module, wherein the first key mirror comprises the key; and
acquiring, by the second crypto module, the first key mirror, and acquiring the key according to the first key mirror to perform a crypto operation with the key when the second crypto module is invoked by a corresponding server.

5. The crypto configuration method according to claim 4, wherein the crypto modules comprise a shared key;
the sending, by the first crypto module, the first key mirror to the crypto management device comprises encrypting, by the first crypto module, a corresponding key mirror with the shared key; and
the acquiring, by the second crypto module, the key according to the first key mirror comprises:
decrypting, by the second crypto module, the first key mirror with the shared key to acquire a key mirror corresponding to the first crypto module; and
acquiring, by the second crypto module, the key according to the key mirror corresponding to the first crypto module.

6. The crypto configuration method according to claim 4, wherein the crypto modules comprise an asymmetric encryption key pair and a signed public key obtained from an external certificate authority, and a first asymmetric encryption key pair of the first crypto module is different from a second asymmetric encryption key pair of the second crypto module; and
before the sending, by the first crypto module, the first key mirror to the crypto management device, the crypto configuration method further comprises:
acquiring, by the first crypto module, a public key certificate of the second crypto module signed by the external certificate authority that is sent by the crypto management device, wherein the public key certificate of the second crypto module comprises a second public key in the second asymmetric encryption key pair;
verifying, by the first crypto module, the validity of the public key certificate of the second crypto module with the signed public key obtained from the external certificate authority; and
in response to the public key certificate being valid, acquiring, by the first crypto module, the second public key in the second asymmetric encryption key pair, and encrypting a corresponding key mirror with the second public key to obtain the first key mirror.

7. The crypto configuration method according to claim 6, wherein the acquiring, by the second crypto module, the first key mirror, and acquiring the key according to the first key mirror comprises:
acquiring, by the second crypto module, the first key mirror;
decrypting, by the second crypto module, the first key mirror with a second private key in the second asymmetric encryption key pair to acquire a key mirror corresponding to the first crypto module; and
acquiring, by the second crypto module, the key according to the key mirror corresponding to the first crypto module.

8. A crypto service method, applied to a crypto module of a server, comprising:
acquiring a crypto service request from a crypto application, wherein the crypto application and the crypto module are on a same server; and
invoking a key to perform a crypto operation according to the crypto service request to provide a crypto service for the crypto application, wherein the key is configured using the crypto configuration method according to any one of claims 1 to 3 and/or claims 4 to 7.

9. A crypto management device, comprising at least one memory and at least one processor, wherein the memory is configured to store one or more computer-executable instructions, and the processor is configured to invoke the one or more computer-executable instructions to perform the crypto configuration method according to any one of claims 1 to 3.

10. A server, comprising at least one memory and at least one processor, wherein the memory is configured to store one or more computer-executable instructions, and the processor is configured to invoke the one or more computer-executable instructions to perform the crypto configuration method according to any one of claims 4 to 7 or the crypto service method according to claim 8.

11. A crypto service system, comprising at least a crypto management device and a plurality of servers, wherein each of the plurality of servers comprises at least a crypto module and a crypto application, and the crypto management device is configured to manage crypto modules of the plurality of servers; and
the crypto module comprises:
a request acquisition unit, configured to acquire a crypto service request from the crypto application; and
a crypto operation unit, configured to invoke a key to perform a crypto operation according to the crypto service request to provide a crypto service for the crypto application, wherein the key is configured by the crypto management device.

12. The crypto service system according to claim 11, wherein the crypto management device comprises:
a configuration information sending unit, configured to send key configuration information to a first crypto module, wherein the key configuration information comprises at least a key for the first crypto module to perform a crypto service, and the first crypto module is any crypto module of any server;
a mirror acquisition unit, configured to acquire a first key mirror of the first crypto module, wherein the first key mirror comprises the key; and
a mirror forwarding unit, configured to forward the first key mirror to a second crypto module such that the second crypto module acquires the key to perform a crypto operation with the key when the second crypto module is invoked by a corresponding server, wherein the second crypto module is another crypto module configured on a different server.

13. The crypto service system according to claim 12, wherein the crypto modules comprise the first crypto module and the second crypto module;
the first crypto module is configured to: acquire the key configuration information sent by the crypto management device, wherein the key configuration information comprises at least the key for performing the crypto service; and send the first key mirror to the crypto management device such that the crypto management device forwards the first key mirror to the second crypto module, wherein the first key mirror comprises the key; and
the second crypto module is configured to acquire the first key mirror, and acquire the key according to the first key mirror to perform the crypto operation with the key when the second crypto module is invoked by a corresponding server.

14. The crypto service system according to claim 13, wherein the crypto module is configured with a signed public key, and the signed public key is configured based on a key file of an external certificate authority.

15. A storage medium, storing one or more computer-executable instructions, wherein the one or more computer-executable instructions, when executed, implement the crypto configuration method according to any one of claims 1 to 3, or the crypto configuration method according to any one of claims 4 to 7, or the crypto service method according to claim 8.
